# FASCICULE DE BREVET EUROPEEN

(11) **EP 1 774 458 B1**
(45) Date de publication et mention de la délivrance du brevet: **07.11.2007**
(21) Numéro de dépôt: 05776382.3
(22) Date de dépôt: 03.06.2005
(51) Int. Cl.: G06K 19/07, H04B 1/707

(54) **Modulation de charge dans un transpondeur éléctromagnetique**
Ladungsmodulation bei einem elektromagnetischen Transponder
Modulation of charge in an electromagnetic transponder

(30) Priorité: 03.06.2004 FR 0451094
(43) Date de publication de la demande: 18.04.2007
(73) Titulaire: STMICROELECTRONICS SA, 92120 Montrouge (FR)
(72) Inventeur: ENGUENT, Jean-Pierre, F-13119 SAINT SAVOURNIN (FR)
(74) Mandataire: de Beaumont, Michel
(86) Numéro de dépôt international: PCT/FR2005/050419
(87) Numéro de publication internationale: WO 2005/124667

(56) Documents cités:
- WO-A-92/17947
- US-A1- 2002 101 332
- US-A1- 2004 100 382
- PATENT ABSTRACTS OF JAPAN vol. 0184, no. 96 (M-1674), 16 septembre 1994 (1994-09-16) & JP 06 166374 A (NIPPON SIGNAL CO LTD:THE), 14 juin 1994 (1994-06-14)

## Description

### Domaine de l'invention

La présente invention concerne les systèmes de transmission de données à transpondeurs électromagnétiques et, plus particulièrement, la transmission de données d'un transpondeur électromagnétique sans contact et sans fil vers une borne de lecture-écriture.

Les transpondeurs électromagnétiques auxquels s'applique plus particulièrement l'invention sont des émetteurs-récepteurs dépourvus d'alimentation autonome, qui extraient l'énergie requise par les circuits électroniques qu'ils comportent d'un champ haute fréquence rayonnée par l'antenne de la borne de lecture-écriture. De tels transpondeurs électromagnétiques sont basés sur l'utilisation de circuits oscillants côté transpondeur et côté borne de lecture-écriture. Ces circuits sont couplés par champ magnétique proche lorsque le transpondeur entre dans le champ de la borne de lecture-écriture.

### Exposé de l'art antérieur

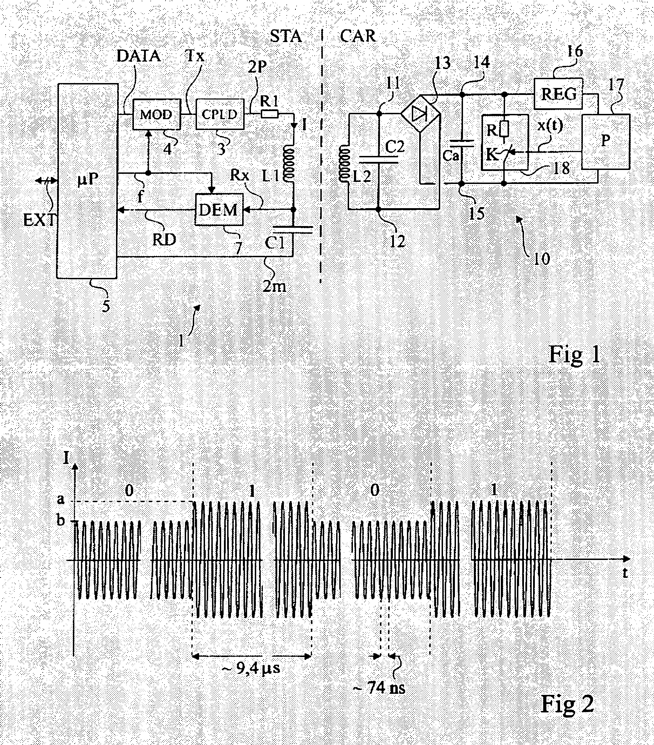

La figure 1 représente, de façon très schématique et fonctionnelle, un exemple classique de système d'échange de données entre une borne 1 de lecture-écriture (STA) et un transpondeur 10 (CAR).

Généralement, la borne 1 est essentiellement constituée d'un circuit oscillant formé d'une inductance L1 en série avec un condensateur C1 et une résistance R1 entre une borne 2p de sortie d'un amplificateur et coupleur d'antenne 3 (CPLD) et une borne 2m à un potentiel de référence (généralement la masse). L'amplificateur 3 reçoit un signal Tx de transmission haute fréquence, issu d'un modulateur 4 (MOD). Le modulateur 4 reçoit une fréquence de référence f et, si besoin, un signal DATA de données à transmettre. En l'absence de transmission de données de la borne 1 vers le transpondeur 10, le signal Tx sert uniquement de source d'énergie pour activer le transpondeur 10 si celui-ci passe dans le champ. Les données à transmettre proviennent généralement d'un système numérique, par exemple, un microprocesseur 5 (µP). Le point de connexion du condensateur C1 et de l'inductance L1 constitue, dans l'exemple représenté à la figure 1, une borne de prélèvement d'un signal Rx de données, reçu d'un transpondeur 10, à destination d'un démodulateur 7 (DEM). Une sortie du démodulateur 7 communique (le cas échéant par l'intermédiaire d'un décodeur non représenté) les données RD reçues au microprocesseur 5. Le démodulateur 7 reçoit généralement la même fréquence f que le démodulateur 4 constituant un signal d'horloge ou de référence pour une démodulation généralement d'amplitude. Le cas échéant, la démodulation est effectuée à partir d'un signal prélevé aux bornes de l'inductance et non aux bornes du condensateur. Le microprocesseur 5 communique (bus EXT) avec différents circuits d'entrée-sortie (clavier, écran, moyen de transmission vers un serveur, etc.) et/ou de traitement. Le plus souvent mais pas nécessairement, la borne de lecture-écriture est alimentée par le réseau de distribution électrique.

Côté transpondeur 10, une inductance L2 en parallèle avec un condensateur C2 forme un circuit oscillant parallèle (appelé circuit résonant en réception), destiné à capter le champ magnétique engendré par le circuit oscillant série L1, C1 de la borne 1. Le circuit résonant L2, C2 du transpondeur 10 est généralement accordé sur la fréquence de résonance du circuit oscillant L1, C1 de la borne 1. Les bornes 11 et 12 du circuit résonant L2, C2 sont reliées à deux bornes d'entrée alternative d'un pont redresseur 13 (par exemple, double alternance). Un condensateur Ca relie les bornes 14 et 15 de sortie redressée du pont 13 de façon à stocker l'énergie et à lisser la tension redressée fournie par le pont. Quand le transpondeur 10 se trouve dans le champ d'une borne 1, une tension haute fréquence est engendrée aux bornes du circuit résonant L2, C2. Cette tension, redressée par le pont 13 et lissée par le condensateur CA, fournit une tension d'alimentation à des circuits électroniques du transpondeur par l'intermédiaire d'un régulateur de tension 16 (REG). Ces circuits illustrés en figure 1 par un bloc 17 (P) comprennent généralement un microcontrôleur, un démodulateur des signaux éventuellement reçus de la borne 1, et un modulateur pour transmettre des informations à la borne. Le transpondeur est généralement synchronisé au moyen d'une horloge extraite du signal haute fréquence récupéré aux bornes du condensateur C2 avant redressement (par une liaison non représentée). Le plus souvent, tous les circuits électroniques du transpondeur 10 sont intégrés dans une même puce (par exemple, pour être portés par une carte à puce). Pour transmettre des données du transpondeur 10 vers la borne, le modulateur intégré au circuit 17 commande un étage 18 de modulation (rétromodulation) du circuit résonant L2, C2. Cet étage de modulation est généralement constitué d'au moins un interrupteur K (par exemple, un transistor) et d'au moins une résistance R (ou condensateur) en série entre les bornes 14 et 15. En variante, l'étage 18 est en amont du pont 13. L'interrupteur K est commandé à une fréquence (par exemple, 847,5 kilohertz) dite de sous-porteuse nettement inférieure (généralement avec un rapport d'au moins 10) à la fréquence du signal d'excitation du circuit oscillant de la borne 1 (par exemple, 13,56 mégahertz). Lorsque l'interrupteur K est fermé, le circuit oscillant du transpondeur est soumis à un amortissement supplémentaire par rapport à la charge constituée des circuits 16 et 17, de sorte que le transpondeur prélève une quantité d'énergie plus importante du champ magnétique haute fréquence. Côté borne 1, l'amplificateur 3 maintient constante l'amplitude du signal d'excitation en haute fréquence. Par conséquent, la variation d'énergie du transpondeur se traduit par une variation d'amplitude et de phase du courant dans l'antenne L1. Cette variation est détectée par le démodulateur 7 de la borne 1. Le démodulateur 7 restitue un signal RD image du signal de commande de l'interrupteur K qui peut être décodé pour restituer les données binaires transmises.

La figure 2 illustre un exemple classique de transmission de données de la borne 1 vers un transpondeur 10 tel que prévu par la norme ISO 14443. La figure 2 représente un exemple d'allure du signal I d'excitation de l'antenne L1 pour une transmission d'un code 0101. La modulation couramment utilisée est une modulation d'amplitude avec un débit de 106 kilobits par seconde (1 bit est transmis en environ 9,4 microsecondes) nettement inférieur à la fréquence (13,56 MHz) de la porteuse f (période d'environ 74 nanosecondes). La modulation d'amplitude s'effectue, par exemple, avec un taux de modulation (défini comme étant la différence des amplitudes crêtes entre les deux états 0 et 1 divisée par la somme de ces amplitudes (a-b/a+b)) inférieur à 100 % en raison du besoin d'alimentation du transpondeur 10. Dans l'exemple de la figure 2, la transmission d'un bit de la borne 1 vers le transpondeur 10 nécessite 128 alternances de la porteuse.

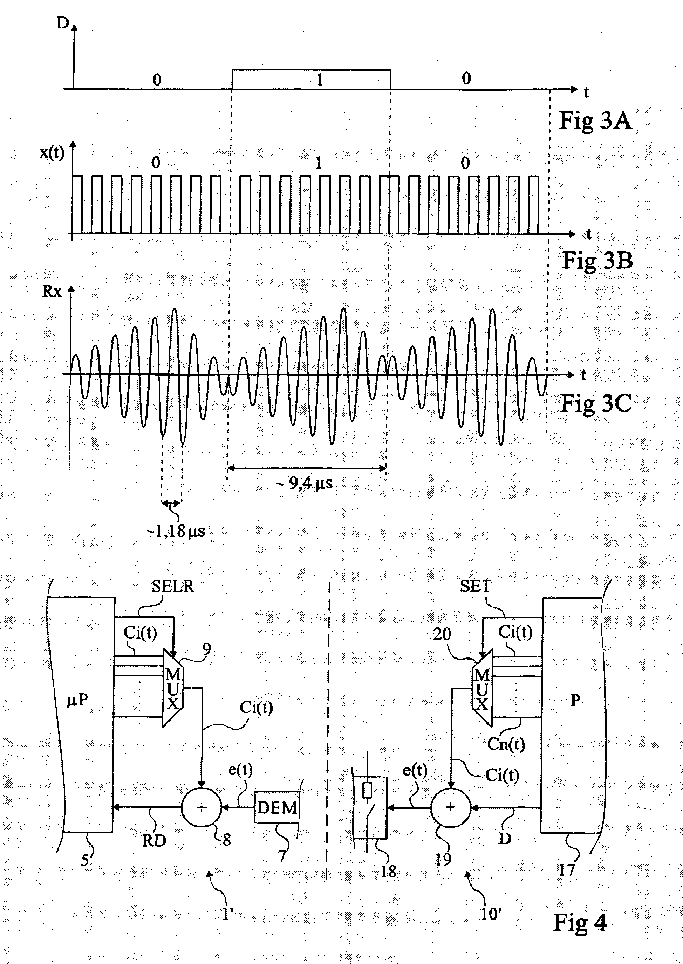

Les figures 3A, 3B et 3C illustrent un exemple classique de transmission de données du transpondeur 10 vers la borne 1. La figure 3A illustre un exemple de code 010 généré par le circuit 17 et qui est à transmettre vers la borne. La figure 3B illustre l'allure correspondante du signal de commande x(t) de l'interrupteur K de rétromodulation. La figure 3C illustre l'allure correspondante du signal Rx reçu par le démodulateur 7 de la borne. En figure 3C, le signal Rx a été représenté lissé, c'est-à-dire sans faire apparaître les ondulations de la porteuse haute fréquence 13,56 mégahertz. Par ailleurs, pour simplifier, on n'a pas tenu compte du décalage temporel lié à transmission. Côté transpondeur, la rétromodulation est de type résistive ou capacitive avec une sous-porteuse de 847,5 kHz (période d'environ 1,18 microseconde). Cette rétromodulation est par exemple basée sur un codage de type BPSK (Binary Phase Shift Keying) à un débit de l'ordre de 106 kilobits par seconde, nettement inférieur à la fréquence de la sous-porteuse. Quel que soit le type de modulation utilisé (par exemple, amplitude, phase ou fréquence) et quel que soit le type de codage des données (NRZ, NRZI, Manchester, ASK, BPSK etc.), la rétromodulation est effectuée de façon numérique, par saut entre deux états binaires. Comme l'illustre la figure 3B, le signal x(t) est constitué d'un train d'impulsions à la fréquence de la sous-porteuse, une inversion de phase intervenant à chaque passage d'un bit au suivant dans la mesure où il s'agit à chaque fois d'un changement d'état. Ce saut de phase se retrouve dans le signal Rx reçu et permet à la borne de récupérer le code transmis.

Le document WO9217947 décrit un transpondeur mettant en oeuvre un procédé de modulation à base de séquence d'étalement de spectre. Le transpondeur met en oeuvre un algorithme pré-établi de changement de séquence d'étalement de spectre utilisé à chaque émission.

La transmission du transpondeur vers la borne pose un problème particulier en terme de bruit. En effet, les différents composants du transpondeur et notamment un circuit de pompe de charge que comporte le régulateur 16 génère souvent un bruit de commutation qui se trouve à une fréquence voisine de la fréquence de la sous-porteuse. Dans un tel cas, la résultante du signal x(t) dans le circuit résonant se trouve polluée par du bruit, ce qui rend plus difficile son décodage par la borne.

La présente invention vise à résoudre ce problème en proposant un nouveau procédé de (rétro)modulation de la charge d'un transpondeur pour transmettre des données vers une borne de lecture-écriture.

L'invention vise également à proposer une solution qui soit compatible avec les circuits de rétromodulation (résistif ou capacitif) classiques.

L'invention vise également à proposer une solution ne nécessitant aucune modification structurelle (matérielle) des circuits du transpondeur.

### Résumé de l'invention

Pour atteindre ces objets ainsi que d'autres, la présente invention prévoit un procédé de modulation de données à transmettre par un transpondeur électromagnétique au moyen d'au moins un élément de modulation résistif et/ou capacitif de la charge d'un circuit oscillant qu'il comporte, consistant à combiner, par une fonction involutive, le flux de données à transmettre avec une séquence d'étalement de spectre, ladite séquence étant sélectionnée en fonction d'un message de configuration reçu d'une borne de lecture-écriture.

Selon un mode de mise en oeuvre de la présente invention, ladite fonction est un OU-Exclusif.

Selon un mode de mise en oeuvre de la présente invention, ladite séquence d'étalement est sélectionnée parmi un ensemble de séquences ayant toutes pour caractéristique d'avoir une fréquence moyenne dans la plage de fonctionnement d'un démodulateur que comporte la borne.

Selon un mode de mise en oeuvre de la présente invention, la fréquence d'une porteuse de téléalimentation de la borne vers le transpondeur est utilisée comme horloge de génération de la séquence d'étalement.

Selon un mode de mise en oeuvre de la présente invention, ledit message de configuration est transmis dans une trame de requête émise en boucle par la borne de lecture-écriture.

Selon un mode de mise en oeuvre de la présente invention, un transpondeur recevant ladite requête répond dans une trame en utilisant une séquence d'étalement sélectionnée d'après ledit message binaire reçu de la borne.

Selon un mode de mise en oeuvre de la présente invention, la borne mémorise une pluralité de réponses effectuées avec des séquences d'étalement différentes et envoie une dernière requête avec un message de configuration correspondant à la réponse reçue avec la meilleure qualité.

Selon un mode de mise en oeuvre de la présente invention, la séquence d'étalement constitue une clé de chiffrement des données transmises.

La présente invention prévoit également un procédé de démodulation d'un signal reçu d'un transpondeur électromagnétique consistant à combiner le signal, par une même fonction, avec la même séquence d'étalement que celle ayant servie à l'émission.

La présente invention prévoit également un transpondeur électromagnétique comprenant :
un circuit oscillant ;
un circuit électronique incluant un circuit de transmission pour transmettre des informations codées numériquement ;
au moins un circuit de modulation résistive et/ou capacitive couplé au circuit oscillant ; et
des moyens pour mettre en oeuvre le procédé de l'invention.

La présente invention prévoit également une borne de communication avec un transpondeur électromagnétique, comprenant :
un circuit oscillant ;
un circuit électronique incluant un circuit de transmission pour transmettre des informations codées numériquement ;
un circuit de modulation couplé au circuit oscillant ;
un démodulateur d'un signal prélevé sur le circuit oscillant ; et
des moyens pour mettre en oeuvre le procédé de l'invention.

### Brève description des dessins

Ces objets, caractéristiques et avantages, ainsi que d'autres de la présente invention seront exposés en détail dans la description suivante de modes de réalisation particuliers faite à titre non limitatif en relation avec les figures jointes parmi lesquelles :
la figure 1 qui a été décrite précédemment représente un exemple de système de transmission auquel s'applique la présente invention ;
la figure 2 qui a été décrite précédemment illustre un exemple classique de transmission de données dans le sens borne vers transpondeur ;
les figures 3A, 3B et 3C qui ont été décrites précédemment illustrent un exemple classique de transmission de données dans le sens transpondeur vers borne ;
la figure 4 représente, de façon partielle et schématique, un mode de mise en oeuvre du procédé de transmission selon la présente invention ;
les figures 5A, 5B, 5C et 5D représentent un premier exemple de transmission d'un code 0110 par la mise en oeuvre de l'invention ;
les figures 6A, 6B, 6C et 6D illustrent un deuxième exemple de transmission du même code 0110 par la mise en oeuvre de l'invention ;
la figure 7 représente, de façon très schématique et simplifiée, un système de communication entre une borne et un transpondeur selon un mode de réalisation préféré de l'invention ;
la figure 8 illustre la structure d'un exemple de trame d'interrogation par une borne à destination de transpondeur susceptible d'être présent dans son champ ;
la figure 9 illustre la structure d'un mot de la trame de la figure 8 ; et
la figure 10 illustre la structure d'un exemple de trame de réponse d'un transpondeur selon un mode de mise en oeuvre de l'invention.

### Description détaillée

Les mêmes éléments ont été désignés par de mêmes références aux différentes figures qui ont été tracées sans respect d'échelle. Pour des raisons de clarté, seuls les éléments et étapes de procédé qui sont nécessaires à la compréhension de l'invention ont été représentés aux figures et seront décrits par la suite. En particulier, les circuits de génération et d'exploitation des données binaires transmises n'ont pas été détaillés et ne font pas l'objet de l'invention, ceux-ci pouvant être mis en oeuvre avec des structures classiques.

Une caractéristique de la présente invention est de moduler un signal numérique de données binaires à transmettre (le cas échéant après codage) au moyen d'une séquence d'étalement de spectre. Selon l'invention, cette séquence d'étalement est choisie parmi un ensemble de séquences disponibles pour ses qualités en terme d'absence de bruit dans la transmission.

L'utilisation de séquences d'étalement est connue pour des transmissions multiples. Dans ces applications, des séquences d'étalement de spectre sont utilisées pour différencier les différentes transmissions utilisant un même support (par exemple, dans la téléphonie). Le plus souvent, ces séquences d'étalement sont sélectionnées de façon aléatoire au début de chaque transmission. Lorsque se pose un problème de bruit dans une de ces communications multi-trajets, on augmente la puissance d'émission mais on ne change pas la séquence d'étalement.

A l'inverse, la présente invention propose dans une application mono-trajet, c'est-à-dire dans une communication d'un transpondeur vers une borne, de sélectionner une séquence d'étalement parmi un ensemble de séquences prédéterminées (pas de sélection aléatoire) en fonction de ses caractéristiques de bruit.

Une autre caractéristique de l'invention est d'adapter la séquence d'étalement utilisée aux conditions de fonctionnement du système en temps réel. Pour cela, l'invention tire profit de la structure des échanges entre une borne et un transpondeur dans lesquels une borne émet périodiquement une trame d'interrogation jusqu'à ce qu'un transpondeur réponde. Ainsi, l'invention prévoit, de façon préférentielle, d'utiliser cette trame pour envoyer aux transpondeurs éventuellement dans le champ, des bits de configuration de leurs circuits de rétromodulation, pour sélectionner une séquence d'étalement et pour changer cette sélection si les données reçues ne sont pas correctement exploitables par la borne.

La figure 4 représente, de façon partielle et très schématique, un mode de réalisation d'une borne 1' de lecture-écriture et d'un transpondeur 10' adaptés pour la mise en oeuvre du procédé de l'invention. Pour simplifier, seul le microprocesseur 5 (µP) et le démodulateur 7 (DEM) ont été représentés côté borne 1', le reste des constituants étant similaires au cas classique (figure 1). De même, côté transpondeur 10', seul le bloc 17 représentant les circuits de traitement et le bloc 18 représentant l'étage de rétromodulation ont été représentés.

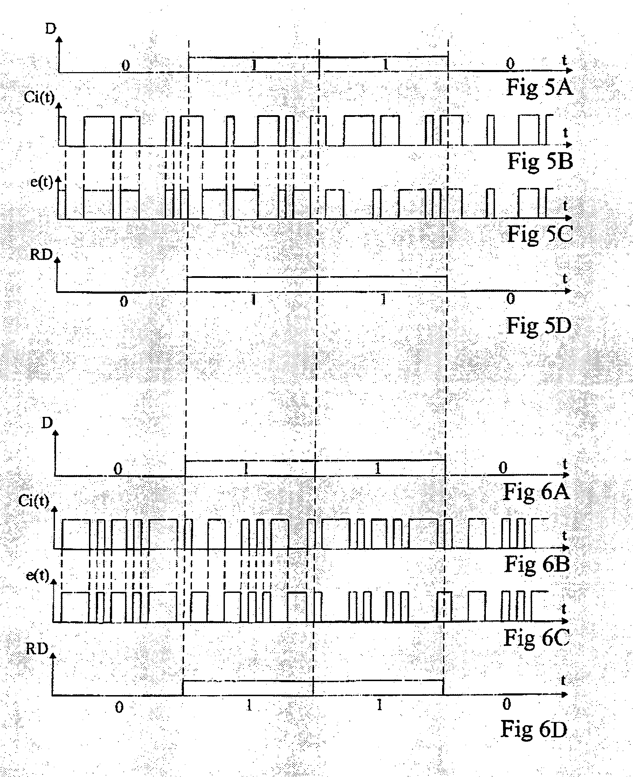

La figure 4 sera décrite en relation avec les figures 5A, 5B, 5C, 5D et 6A, 6B, 6C et 6D qui illustrent, par des chronogrammes représentant des signaux caractéristiques en des points de la figure 4 pour deux séquences d'étalement différentes, le fonctionnement de l'invention.

Comme précédemment, les circuits 17 du transpondeur génèrent un flux D de données binaires à transmettre vers une borne. Que ces données aient été préalablement codées ou non n'a pas d'importance.

Selon l'invention, le flux D (figure 5A ou figure 6A) est combiné par exemple par une fonction de type OU-Exclusif 19, avec une séquence d'étalement cᵢ(t). Deux exemples de séquences d'étalement cᵢ(t) différentes sont représentés aux figures 5B et 6B. Le résultat de la combinaison constitue le signal e(t) de commande de l'étage 18 de rétromodulation. En d'autres termes, le signal e(t) de l'invention remplace le signal x(t) du transpondeur classique de la figure 1. Les figures 5C et 6C représentent les allures respectives des signaux e(t) pour les séquences d'étalement respectives des figures 5B et 6B.

Côté borne 1' de lecture-écriture, le démodulateur 7 restitue le signal e(t). Ce signal est de nouveau combiné (bloc 8) par une fonction de même type (par exemple OU-Exclusif) avec la même séquence d'étalement de spectre cᵢ(t) que contient également la borne 1', par exemple, dans une mémoire. Le bloc 8 fournit le signal RD (figures 5D et 6D) au circuit 5 d'exploitation des données.

Une combinaison par une fonction OU-Exclusif constitue un mode de réalisation préféré pour sa simplicité de mise en oeuvre. Toutefois, toute autre fonction involutive (fonction f telle que, pour tout couple (x,y), f(f(x,y)) = (x,y)) pourra être choisie, l'important étant d'être capable de récupérer, côté borne, les données transmises en utilisant la même séquence d'étalement de spectre que celle ayant servi à l'émission.

Fonctionnellement, la sélection de la séquence d'étalement cᵢ(t) est effectuée, côté transpondeur 10', par exemple par un multiplexeur 20 et, côté borne, par un multiplexeur 9. Les multiplexeurs 20 et 9 sont respectivement commandés par des signaux de sélection SELT et SELR fournis par les circuits internes respectifs 17 et 5. Les multiplexeurs 20 et 9 reçoivent n séquences d'étalement C₁(t), ..., Cₙ(t). Bien sûr, pour être capable de démoduler, la séquence d'étalement Cᵢ(t) sélectionnée par la borne (signal SELR) doit être la même que celle sélectionnée par le transpondeur pour l'émission (signal SELT).

Comme il ressort des chronogrammes des figures 5 et 6, la transmission d'un même flux de données 0110 par deux séquences d'étalement différentes (figures 5B et 6B) permet à la borne de récupérer le flux de données RD, pourvu d'utiliser la même séquence d'étalement pour le décodage (bloc 8).

Selon l'invention, les n séquences d'étalement sont générées en respectant une fréquence moyenne dans la plage de fonctionnement du démodulateur 7 de la borne. Cela permet de ne pas modifier le démodulateur malgré l'utilisation de séquences d'étalement différentes. En reprenant l'exemple de la borne ISO 14443, les séquences d'étalement seront préférentiellement toutes comprises dans des fréquences moyennes de 600 à 1000 kHz, de façon à rester proche de la fréquence de 847,5 kHz exploitable par le démodulateur 7.

La génération des séquences d'étalement utilise préférentiellement la fréquence f de la porteuse générée par la borne. Cette fréquence est en effet disponible côté borne et côté transpondeur et son rapport d'au moins 10 avec la fréquence de la sous-porteuse permet la génération de séquences d'étalement différentes les unes des autres. Dans l'exemple des figures, la longueur (fréquence de répétition du motif) des séquences d'étalement cᵢ(t) correspond arbitrairement à la durée de deux bits à transmettre. Toutefois, les longueurs respectives des séquences d'étalement n'ont pas d'importance, elles peuvent être différentes d'une séquence à une autre et correspondre ou non à des multiples de la fréquence de 847,5 kHz. La seule contrainte est la fréquence utilisée pour générer la séquence (par exemple, 13,56 MHz), qui doit être compatible avec la fréquence d'horloge utilisable par les circuits du transpondeur et de la borne, et qui conditionne la largeur minimale d'une impulsion de la séquence et l'écart minimal entre deux impulsions.

Le nombre n de séquences d'étalement disponibles dépend des capacités respectives du transpondeur et de la borne. Par exemple, dans un mode de réalisation préféré, on choisira parmi un ensemble de huit à trente-deux séquences d'étalement.

Les différentes séquences d'étalement utilisables par un système donné peuvent avoir été générées à l'avance et être mémorisées dans des mémoires du transpondeur et de la borne ou être générées en temps réel, à la volée. Ce qui importe c'est que pour un identifiant donné d'une séquence d'étalement, un transpondeur et une borne adaptés à communiquer ensemble utilisent la même séquence d'étalement. La génération des séquences d'étalement fait appel à des techniques en elles-mêmes classiques, notamment pour ce qui concerne la longueur des séquences. En particulier, la génération elle-même (pas la sélection) peut faire appel à des techniques pseudo-aléatoires (respectant les fréquences moyennes acceptées par le démodulateur).

Un avantage de la présente invention est qu'elle permet de minimiser les effets des bruits sur la transmission dans le sens transpondeur vers borne. Même si la séquence choisie ne supprime pas tout bruit, la mise en oeuvre de l'invention permet de sélectionner celle fournissant une qualité de transmission considérée comme acceptable ou la meilleure parmi les qualités disponibles. Contrairement aux applications où l'on augmente la puissance de transmission, l'invention s'applique à un domaine (transpondeur électromagnétique téléalimenté) dans lequel la puissance est limitée et ne peut pas être accrue.

Un autre avantage de la présente invention est que la séquence d'étalement peut servir également de clé de chiffrement de la transmission. Ainsi, le piratage des données entre un transpondeur et une borne est rendu plus difficile.

La sélection du code ou séquence d'étalement pour une transmission donnée peut prendre différentes formes. Selon un premier exemple, on passe en revue tous les codes d'étalement disponibles (par exemple successivement dans l'ordre) et la borne sélectionne celui donnant le meilleur niveau de transmission. La borne transmet alors au transpondeur un identifiant de cette séquence d'étalement pour lui permettre de configurer son signal SELT. Selon un autre exemple, la borne sélectionne, lors du passage en revue les séquences d'étalement les unes après les autres, la première qui fournit un niveau de réception acceptable.

De préférence, la séquence d'étalement est choisie au début d'une transmission. L'invention tire alors profit du fait que, dans les systèmes de transmission à transpondeur électromagnétique, des phases d'interrogation de la borne sont reproduites périodiquement. Ces phases sont alors utilisées par l'invention pour configurer la séquence d'étalement.

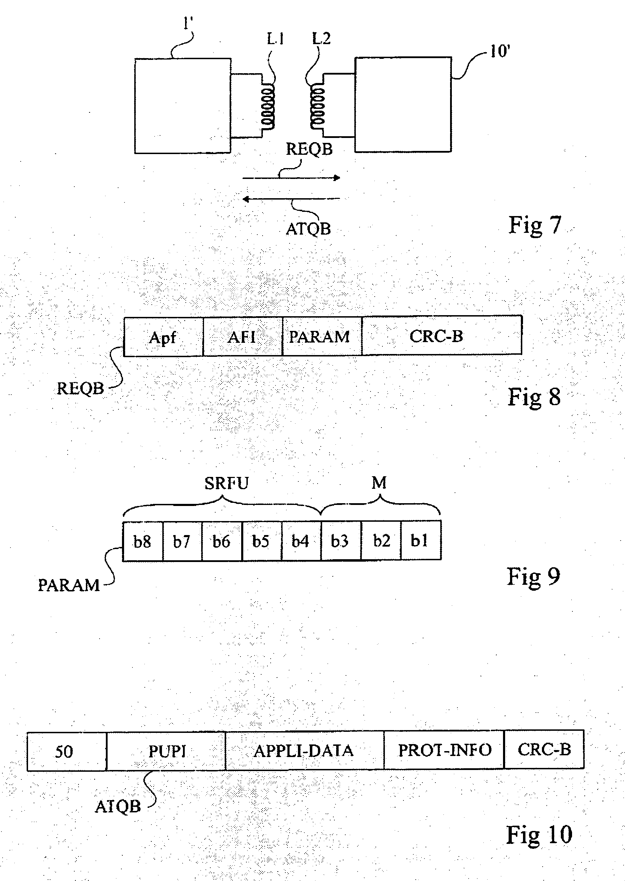

La figure 7 représente, de façon très schématique, une borne 1' de lecture-écriture et son antenne L1, et un transpondeur 10' selon l'invention et son antenne L2. De façon classique, une borne 1' surveille la présence d'un transpondeur 10' dans le champ rayonné par son antenne L1 en envoyant périodiquement une trame REQB susceptible d'être captée par un transpondeur lorsqu'il est présent dans le champ. Dès qu'un transpondeur capte et décode une trame REQB transmise par une borne, il répond par une trame d'accusé-réception ATQB. Cette réponse s'effectue en commutant la charge ajoutée sur le circuit oscillant, dans les systèmes classiques, au rythme de la sous-porteuse de rétromodulation. Selon l'invention, cette commutation est effectuée au rythme de la séquence d'étalement sélectionnée comme on le verra par la suite.

D'après la norme ISO 14443, les trames REQB et ATQB ont des formats particuliers. On notera toutefois que l'invention n'est pas limitée à ces trames et peut être mise en oeuvre dès qu'une borne envoie périodiquement des messages d'interrogation à destination de transpondeurs éventuellement présents dans son champ et qu'un transpondeur, dès qu'il est présent, répond par un message particulier. De plus, l'invention est compatible avec des systèmes où une même borne peut communiquer avec plusieurs transpondeurs.

La figure 8 illustre la structure d'une trame REQB d'après la norme ISO 14443 prise pour exemple. Cette trame comporte d'abord un octet Apf (Anticollision Prefix Byte) constituant un préfixe d'anticollision. L'octet Apf est suivi d'un octet AFI (Application Family Identifier) qui représente le type d'application(s) visée(s) par la borne et qui est utilisé pour sélectionner un transpondeur susceptible de répondre à une trame REQB donnée. L'octet AFI est suivi d'un octet PARAM de paramétrage d'anticollision, lui-même suivi de deux octets CRC-B contenant un calcul fait sur les octets précédents, permettant de détecter les erreurs de communication.

Dans cet exemple, la présente invention utilise de préférence des bits de l'octet PARAM pour transmettre un ordre de sélection de la séquence d'étalement de n'importe quel transpondeur présent dans le champ de la borne. En effet, comme l'illustre la figure 9 qui représente la structure d'un octet PARAM selon la norme 14443, les trois premiers bits B1, B2, B3 sont utilisés pour fixer un paramètre M d'anticollision alors que les cinq autres bits B5, B6, B7 et B8 sont libres (SRFU). Ainsi, l'invention prévoit d'utiliser préférentiellement ces cinq bits pour transmettre un code à un transpondeur afin de lui fixer la séquence d'étalement souhaitée. Cinq bits disponibles représentent 32 sélections possibles, ce qui est largement suffisant (32 séquences d'étalement).

Le transpondeur recevant une trame REQB interprète les bits B4 à B8 du mot PARAM comme des consignes différentes de la séquence d'étalement à choisir. Il importe peu qu'un transpondeur donné ne soit pas capable de sélectionner toutes les combinaisons des bits B4 à B8, en particulier s'il ne dispose pas du même nombre de séquences d'étalement disponibles pour des questions d'encombrement mémoire. Ce qui importe c'est que, pour un code donné, il sélectionne la même séquence d'étalement que la borne.

Lorsqu'un transpondeur décode une trame REQB, il y répond par une trame ATQB. Une trame ATQB selon la norme 14443 comprend 14 octets.

La figure 10 représente un exemple de contenu d'une trame ATQB. Un premier octet contient une valeur fixe (par exemple, le nombre 50). Les trois octets suivants contiennent un identifiant PUPI (Pseudo Unique PICC Identifier) du transpondeur. Les quatre octets suivants (APPLI-DATA) identifient le type d'application(s) contenue(s) dans le transpondeur. Les trois octets suivants (PROT-INFO) contiennent des informations sur le protocole de communication, et les deux derniers octets CRC-B contiennent le calcul de CRC.

Cette réponse ATQB est, selon l'invention, effectuée en utilisant une séquence d'étalement particulière fonction de la combinaison fixée par les bits B4 et B8 du mot PARAM. Lorsque le lecteur (la borne 1') reçoit le message ATQB et le décode, il est en mesure de déterminer si le message qu'il reçoit est de qualité suffisante et, notamment, s'il est trop bruité.

Selon un premier mode de mise en oeuvre, on utilise un seuil côté borne pour déterminer si la qualité de réception est ou non satisfaisante. Dans ce cas, les différentes combinaisons des bits de configuration B4 à B8 sont envoyées successivement dans des trames REQB et, dès qu'une trame ATQB est reçue avec une qualité suffisante, on passe à la suite de la communication, sans transmettre les autres trames REQB. La séquence d'étalement ayant servi à l'envoi de cette dernière trame ATQB reste utilisée par le transpondeur 10' jusqu'à l'apparition d'une nouvelle trame REQB.

Selon un autre mode de mise en oeuvre, la trame REQB est envoyée en boucle en utilisant toutes les possibilités et en mémorisant les niveaux reçus par les trames respectives de réponse ATQB. Une fois la meilleure séquence d'étalement déterminée par la borne, celle-ci réutilise le mot PARAM dans une dernière requête REQB pour fixer au transpondeur la séquence souhaitée. Côté transpondeur, celui-ci garde la configuration fixée par la trame REQB jusqu'à la prochaine trame REQB, c'est-à-dire jusqu'à la transmission suivante.

Un balayage des différentes possibilités est parfaitement compatible avec les débits de transmission. En effet, la durée habituelle d'une requête REQB est de l'ordre de 380 microsecondes et la durée habituelle d'une réponse ATQB est de l'ordre de la milliseconde, ce qui est négligeable par rapport à la vitesse de déplacement d'un transpondeur devant la borne qui est de plusieurs centaines de millisecondes (vitesse de déplacement d'une main tenant la carte à puce par exemple). La durée habituelle d'une transmission entre une borne et un transpondeur avant de redémarrer des requêtes REQB est généralement de l'ordre de plusieurs dizaines de millisecondes, ce qui est là encore parfaitement compatible avec la durée requise pour fixer, par la mise en oeuvre de l'invention, la séquence d'étalement utilisée dans la rétromodulation.

Un avantage de la présente invention est qu'elle permet d'optimiser la qualité de réception par la borne, quelles que soient les éventuelles perturbations présentes et notamment le bruit généré par le transpondeur lui-même.

Un autre avantage de l'invention est qu'elle permet une adaptation dynamique, c'est-à-dire à chaque échange entre un transpondeur et une borne.

Un autre avantage de l'invention et qu'elle ne nécessite pas de modifier la structure des bornes classiques. Il suffit, pour la norme 14443, de prévoir des bits B4 à B8 particuliers dans la trame REQB émise en boucle par la borne. Par la suite, l'exploitation des données reçues par le démodulateur s'effectuant généralement de façon logicielle, la mise en oeuvre de l'invention par une combinaison OU-Exclusif avec la séquence d'étalement ne nécessite qu'une modification logicielle et pas de modification structurelle. En variante, pour une réalisation matérielle de l'invention, une simple porte OU-Exclusif et un multiplexeur suffisent. De même, l'invention ne nécessite pas de modification structurelle des transpondeurs existants, l'invention peut être mise en oeuvre de façon exclusivement logicielle côté transpondeur en faisant générer, par le microprocesseur de celui-ci, directement la séquence e(t) combinant la séquence d'étalement sélectionnée avec les données à transmettre.

Bien entendu, la présente invention est susceptible de diverses variantes et modifications qui apparaîtront à l'homme de l'art. En particulier, bien que l'invention ait été décrite en relation avec un mode de mise en oeuvre préféré adapté à la norme ISO 14443, on pourra prévoir de modifier une trame d'émission en boucle par une borne pour s'adapter à d'autres systèmes de transmission. De plus, la mise en oeuvre pratique de l'invention par des moyens matériels et/ou logiciels est à la portée de l'homme du métier à partir des indications fonctionnelles données ci-dessus. En outre, la génération de séquences d'étalement adaptées et notamment la détermination de leurs longueurs respectives est à la portée de l'homme du métier en utilisant des méthodes classiques de génération de telles séquences d'étalement.

## Revendications

1. Procédé de modulation de données (D) à transmettre par un transpondeur électromagnétique (10') au moyen d'au moins un élément (18) de modulation résistif et/ou capacitif de la charge d'un circuit oscillant qu'il comporte, **caractérisé en ce qu'**il consiste à combiner, par une fonction involutive (19), le flux de données à transmettre à une borne de lecture-écriture (1') avec une séquence d'étalement de spectre (cᵢ(t)), ladite séquence étant sélectionnée en fonction d'un message de configuration (SRFU) reçu de ladite borne de lecture-écriture (1').

2. Procédé selon la revendication 1, dans lequel ladite fonction (19) est un OU-Exclusif.

3. Procédé selon la revendication 1 ou 2, dans lequel ladite séquence d'étalement (cᵢ(t)) est sélectionnée parmi un ensemble de séquences ayant toutes pour caractéristique d'avoir une fréquence moyenne dans la plage de fonctionnement d'un démodulateur (7) que comporte la borne (1').

4. Procédé selon l'une quelconque des revendications 1 à 3, dans lequel la fréquence (f) d'une porteuse de téléalimentation de la borne (1') vers le transpondeur (10') est utilisée comme horloge de génération de la séquence d'étalement (cᵢ(t)).

5. Procédé selon l'une quelconque des revendications 1 à 4, dans lequel ledit message de configuration (SRFU) est transmis dans une trame de requête (REQB) émise en boucle par la borne de lecture-écriture (1').

6. Procédé selon la revendication 5, dans lequel un transpondeur (10') recevant ladite requête (REQB) répond dans une trame (ATQB) en utilisant une séquence d'étalement (cᵢ(t)) sélectionnée d'après ledit message (PARAM) binaire reçu de la borne.

7. Procédé selon la revendication 6, dans lequel la borne (1') mémorise une pluralité de réponses (ATQB) effectuées avec des séquences d'étalement différentes et envoie une dernière requête (REQB) avec un message de configuration correspondant à la réponse reçue avec la meilleure qualité.

8. Procédé selon l'une quelconque des revendications 1 à 7, dans lequel la séquence d'étalement constitue une clé de chiffrement des données transmises.

9. Procédé de démodulation d'un signal reçu d'un transpondeur électromagnétique et contenant des données modulées par le procédé selon l'une quelconque des revendications 1 à 8, **caractérisé en ce qu'**il consiste à combiner le signal, par une même fonction, avec la même séquence d'étalement que celle ayant servie à l'émission.

10. Transpondeur électromagnétique comprenant :
un circuit oscillant (L2, C2) ;
un circuit électronique (17) incluant un circuit de transmission pour transmettre des informations codées numériquement ;
au moins un circuit (18) de modulation résistive et/ou capacitive couplé au circuit oscillant ; et
des moyens pour mettre en oeuvre le procédé selon l'une quelconque des revendications 1 à 8.

11. Borne (1') de communication avec un transpondeur électromagnétique (10'), comprenant :
un circuit oscillant (L1, C1) ;
un circuit électronique (5) incluant un circuit de transmission pour transmettre des informations codées numériquement ;
un circuit de modulation (4) couplé au circuit oscillant ;
un démodulateur (7) d'un signal prélevé sur le circuit oscillant ; et
des moyens pour mettre en oeuvre le procédé selon la revendication 9; et
des moyens pour émettre ledit message de configuration.

## Claims

1. A method for modulating data (D) to be transmitted by an electromagnetic transponder (10') by means of at least one resistive and/or capacitive element (18) of modulation of the load of an oscillating circuit that it comprises, **characterized in that** it consists of combining, by an involutional function (19), the data flow to be transmitted to a read/write terminal (1') with a spectrum spreading sequence (ci(t)), said sequence being selected according to a configuration message (SRFU) received from said read/write terminal (1').

2. The method of claim 1, wherein said function (19) is an XOR.

3. The method of claim 1 or 2, wherein said spreading sequence (ci(t)) is selected from a set of sequences all having the feature of having an average frequency in the operating range of a demodulator (7) comprised by the terminal (1').

4. The method of any of claims 1 to 3, wherein the frequency (f) of a remote-supply carrier from the terminal (1') to the transponder (10') is used as a clock for generating the spreading sequence (ci(t)).

5. The method of any of claims 1 to 4, wherein said configuration message (SRFU) is transmitted in a request frame (REQB) transmitted in a loop by the read/write terminal (1').

6. The method of claim 5, wherein a transponder (10') receiving said request (REQB) responds in a frame (ATQB) by using a spreading sequence (ci(t)) selected according to said binary message (PARAM) received from the terminal.

7. The method of claim 6, wherein the terminal (1') stores a plurality of responses (ATQB) performed with different spreading sequences and sends a last request (REQB) with a configuration message corresponding to the response received with the best quality.

8. The method of any of claims 1 to 7, wherein the spreading sequence forms a key for ciphering the transmitted data.

9. A method for demodulating a signal received from an electromagnetic transponder and containing data modulated by the method of any of claims 1 to 8, consisting of combining the signal, by a same function, with the same spreading sequence as that having been used for the transmission.

10. An electromagnetic transponder comprising:
an oscillating circuit (L2, C2);
an electronic circuit (17) comprising a transmit circuit for transmitting digitally-coded data;
at least one resistive and/or capacitive modulation circuit (18) coupled to the oscillating circuit; and
means for implementing the method of any of claims 1 to 8.

11. A terminal (1') of communication with an electromagnetic transponder (10'), comprising:
an oscillating circuit (L1, C1);
an electronic circuit (5) comprising a transmit circuit for transmitting digitally-coded data;
a modulation circuit (4) coupled with the oscillating circuit;
a demodulator (7) of a signal sampled from the oscillating circuit;
means for implementing the method of claim 9; and
means for transmitting said configuration message.

## Patentansprüche

1. Ein Verfahren zum Modulieren von Daten (D), die zu übetragen bzw. zu senden sind durch einen elektromagnetischen Transponder (10') mittels wenigstens einen resistiven und/oder kapazitiven Element (18) zur Modulation der Last einer oszillierender Schaltung bzw. eines Schwingkreises, die er aufweist, **dadurch gekennzeichnet dass** es besteht aus Kombinieren, mittels einer Involutionsfunktion (19), des an ein Schreib/Lese-Terminal (1') zu übertragenden Datenflusses mit einer Spreizspektrumssequenz (cᵢ (t)), wobei die Sequenz ausgewählt wird, gemäß einer Konfigurationsnachricht (SRFU), die von dem Lese/Schreib-Terminal (1') empfangen wurde.

2. Verfahren nach Anspruch 1, wobei die Funktion (19) ein Exklusiv-ODER bzw. XOR ist.

3. Verfahren nach Anspruch 1 oder 2, wobei die Spreizsequenz (cᵢ (t)) aus einem Satz von Sequenzen ausgewählt wird, die alle das Merkmal besitzen, das sie eine Durchschnittsfrequenz in dem Betriebsbereich von einem Demodulator (7) besitzen, der durch das Terminal (1') umfasst, ist.

4. Verfahren nach irgendeinem der Ansprüche 1 bis 3, wobei die Frequenz (f) eines Fern-Versorgungsträgers von dem Terminal (1') zu dem Transponder (10') als ein Takt bzw. eine Uhr genutzt wird zum Erzeugen der Spreizsequenz (cᵢ (t)).

5. Verfahren nach irgendeinem der Ansprüche 1 bis 4, wobei die Konfigurationsnachricht (SRFU) in einem Anforderungsrahmen (REQB) gesendet bzw. übertragen wird, der in einer Schleife durch das Lese/Schreibterminal (1') gesendet bzw. übertragen wird.

6. Verfahren nach Anspruch 5, wobei ein Transponder (10') der die Anforderung (REQB) empfängt in einem Rahmen (ATQB) antwortet und zwar durch Nutzen einer Spreizsequenz (cᵢ (t)) die gemäß der von dem Terminal empfangenen binären Nachricht (PARAM) ausgewählt wird.

7. Verfahren nach Anspruch 6, wobei das Terminal (1') eine Vielzahl von Antworten (ATQB) speichert, die mit unterschiedlichen Spreizsequenzen durchgeführt werden, und eine letzte Anforderung (REQB) mit einer Konfigurationsnachricht sendet, die der mit der besten Qualität empfangenen Antwort entspricht.

8. Verfahren nach irgendeinem der Ansprüche 1 bis 7, wobei die Spreizsequenz einen Schlüssel zum Verschlüsseln bzw. Chiffrieren der gesendeten Daten bildet.

9. Ein Verfahren zum Demodulieren eines Signals, das von einem elektromagnetischen Transponder empfangen wird und Daten enthält, die durch das Verfahren nach irgendeinem der Ansprüche 1 bis 8 moduliert wurden, wobei das Verfahren aus Kombinieren des Signals durch eine gleiche Funktion mit der gleichen Spreiz-Sequenz wie sie für die Übertragung genutzt worden ist, besteht.

10. Ein elektromagnetischer Transponder, der Folgendes aufweist:
einen Schwingkreis (L2, C2);
eine elektronische Schaltung (17) die eine Übertragungs- bzw. Sendeschaltung zum Übertragen bzw. Senden digital codierter Daten aufweist; wenigstens eine resistive und/oder kapazitive Modulationsschaltung (18) die mit dem Schwingkreis gekoppelt ist; und
Mittel zum Implementieren des Verfahrens nach irgendeinem der Ansprüche 1 bis 8.

11. Ein Terminal (1') zur Kommunikation mit einem elektromagnetischen Transponder (10') das Folgendes aufweist:
eine oszillierende Schaltung bzw. einen Schwingkreis (L1, C1);
eine elektronische Schaltung (5), die eine Sendeschaltung zum Senden digital codierter Daten aufweist;
eine Modulationsschaltung (4), die mit dem Schwingkreis gekoppelt ist;
einen Demodulator (7) eines von dem Schwingkreis abgetasteten Signals;
Mittel zum Implementieren des Verfahrens nach Anspruch 9; und
Mittel zum Senden der Konfigurationsnachricht.
